# EUROPEAN PATENT APPLICATION

(11) **EP 0 613 748 A1**
(43) Date of publication of application: **07.09.1994**
(21) Application number: 92923992.9
(22) Date of filing: 20.11.1992
(51) Int. Cl.: B23K 9/08, B23K 15/00, B23K 26/00

(54) **WELDER**

(30) Priority: 20.11.1991 JP 331350/91
(71) Applicant: OHMI, Tadahiro, Sendai-shi Miyagi-ken 980 (JP)
(72) Inventor: OHMI, Tadahiro 1-17-301, Komegabukuro 2-chome, Miyagi-ken 980 (JP); NAKAMURA, M., Dep. of Electr. Faculty Engineering, Aoba-ku, Sendai-shi; Miyagi-ken 980 (JP)
(74) Representative: Weitzel, Wolfgang, Dr.-Ing. Patentanwalt
(86) International application number: JP9201521
(87) International publication number: WO9309905

(57) **Abstract**

A welder wherein metal fume is prevented from adhering to the vicinity of the surface of the weld, the flatness of the surface of the weld is improved and the deposition of the chrome carbide can be decreased. The welder is adapted for fusing respective predetermined portions (weld) of a plurality of members so as to connect the plurality of members to one another, and is characterized by having a means for applying magnetic fields having vertical components with respect to the surface of the weld.

## Description

### Technical Field

The present invention relates to a welder, and in particular, to a welder which is capable of preventing contamination by fumes such as metal atoms, and the burning of the surface of the welded portion, and moreover, has little welding heat input and is capable of welding with respect to welded members having various shapes. The welder in accordance with the present invention can be particularly advantageously applied to the production of semiconductor apparatuses of super high cleanliness.

### Background Art

Tungsten-inert gas welding, arc gas welding, electron beam welding, and the like, can be employed in the joining of metal members. In this conventional welding technology, almost no consideration is given to the surface roughness of the welded portion, or to the deposition of metal fumes released from the fused portion. For this reason, problems were present in that burning, surface cracking, the deposition of chrome carbide and the like occurred, and in that impurities, primarily metal powder, were generated, and the long term reliability of the physical strength declined.

In the conventional welding technology, the evaporation and dispersion of metal atoms and metal fumes comprising conglomerations thereof from the metal fused portion comprising the welding position occurred, these were cooled in the vicinity of the welded portion, and redeposited. It has been determined that these deposited metals separate in a corrosive gas flow, and as a result, it has been determined that this presents great problems in that it leads to a contamination or deterioration of the processing atmosphere, and this presents a particularly large problem in semiconductor production apparatuses requiring an atmosphere with an extremely high degree of cleanliness.

Furthermore, because the welding heat input was high in the conventional welding technology, the welding bead was wide, and the surface thereof was rough. Furthermore, problems were caused in that there was considerable chrome carbide deposition, and particle boundary corrosion and the like was generated.

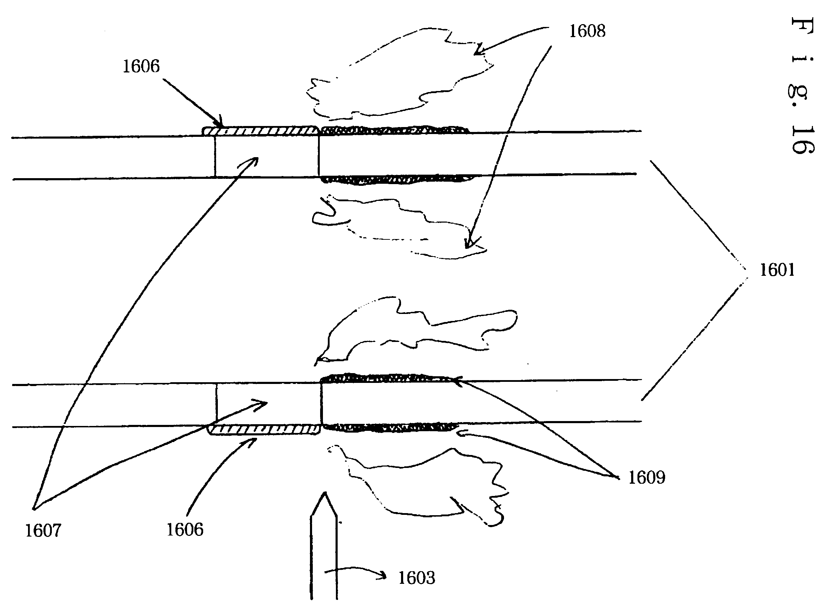

The adhering of metal fumes, the surface cracking of the welded portion, and deposition of chrome carbide on the surface will be explained in greater detail using the figures. The structure of tungsten-inert gas welding of piping materials in accordance with the conventional method is shown in Fig. 16. In the figure, reference 1603 indicates a tungsten electrode, while reference 1601 indicates the piping materials which are to be welded. Reference 1606 indicates a welded portion, while reference 1608 indicates metal fumes which are generated at the fused portion. These metal fumes 1608 adhere to the surface of the piping material 1601 at the downstream side of welded portion 1608 as a result of the arc gas or back seal gas flow, and form deposited metal 1609. Furthermore, in the conventional welding method, no particular restrictions are made with respect to the welding atmosphere, so that this atmosphere is contaminated with ambient air and burning 1607 is generated on the surface of the welded portion. Deposited metal 1609 does not separate with respect to an inert gas; however, when a corrosive gas, for example, hydrogen chloride gas, or the like, is caused to flow, this metal separates, and the gas atmosphere is contaminated. The metals which separate comprise Fe, Ni, Cr, Mn, and the like, which are chiefly contained in the metal material; these are detected in the gas atmosphere. These impurities cause a marked deterioration in the LSI characteristics, so that this presents a grave problem in semiconductor manufacture.

In light of the above points, the present invention has as an object thereof to provide a welder which is capable of preventing the deposition of metal or burning in the vicinity of the surface of the welded portion, is capable of improving the flatness of the surface of the welded portion, and is capable of decreasing the deposition of chrome carbide by reducing the heat input.

### Disclosure of the Invention

The present invention resides in a welder which fuses a plurality of members at predetermined portions (welded portions), and thus connects this plurality of members, and is characterized in being provided with a mechanism for applying magnetic fields having vertical components with respect to the surface of the welded portion.

### Function

By forming magnetic fields having vertical components with respect to the surface of a welded portion using electromagnets or permanent magnets, the metal fumes released during welding are stopped at the fused portion, the flow thereof to the downstream side of the portion at which welding is executed is prevented, and the deposition of the metal fumes on the members to be welded is prevented. Furthermore, because the electrical conductivity of the fused metal is large, the flatness of the welded portion is increased by the magnetic field.

Furthermore, the magnetic field is capable of focusing the ions or electrons which are generated by the fusing mechanism, so that it is possible to focus the beam, and it is possible to narrow the welding bead width. At the same time, it becomes possible to reduce the heat input and the deposition of chrome carbide is thus greatly decreased, and the particle boundary corrosion is markedly decreased.

The appropriate strength of the magnetic field in the present invention is 50 Gauss or more at the surface of the welded portion. A strength of 300 Gauss or more is further preferable. At a strength of 300 Gauss or more, the effect of the prevention of fume dispersion is further increased.

Permanent magnets, or electromagnets, for example, may be employed as the mechanism for applying the magnetic field. Common Al-Ni-Co system magnets may be employed as the permanent magnets; however, in the case in which materials having a high magnetic permeability are to be welded, a samarium/cobalt system magnet may be employed.

The mechanism for fusing the welded portion may employ, for example, electric discharge, an electron beam, or a laser; among mechanisms employing electric discharge, examples include, for example, tungsten-inert gas, arc gas welding, and the like.

### Brief Description of the Drawings

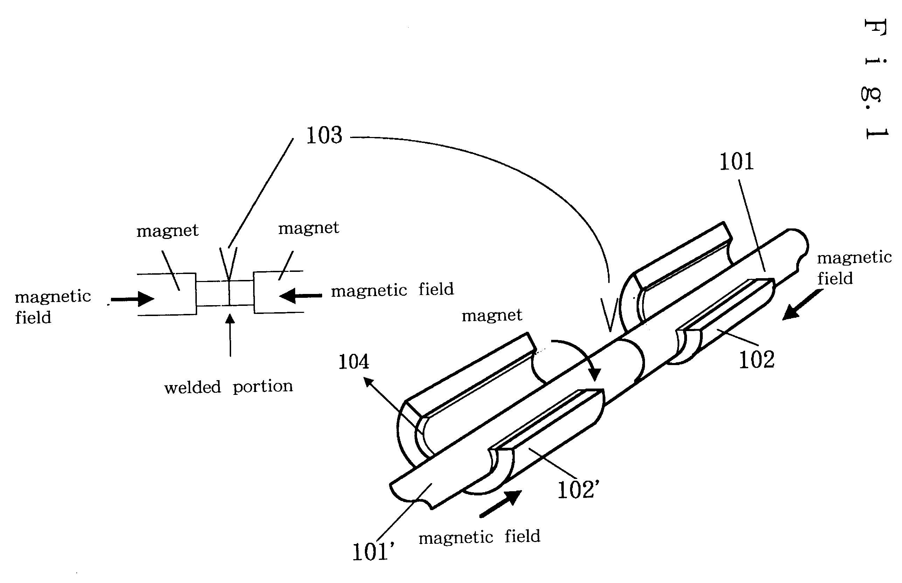

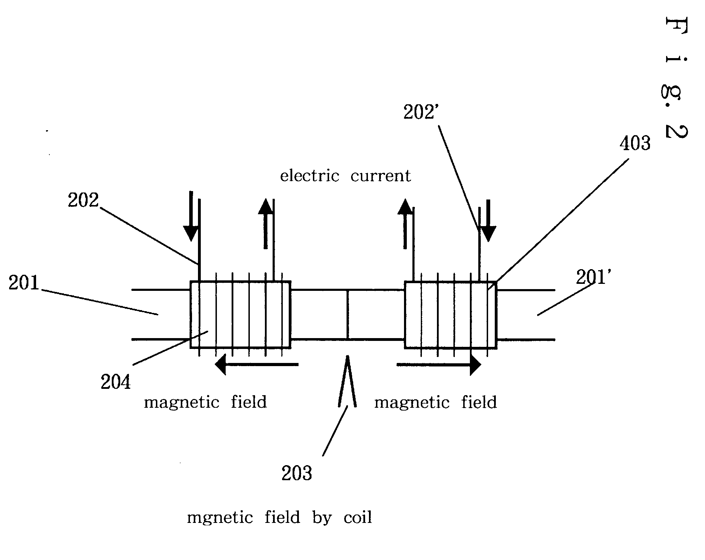

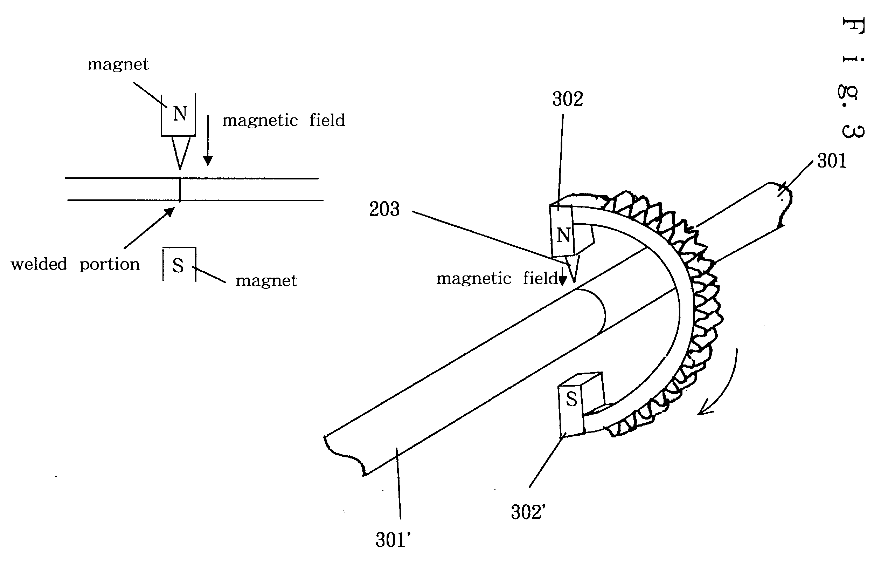

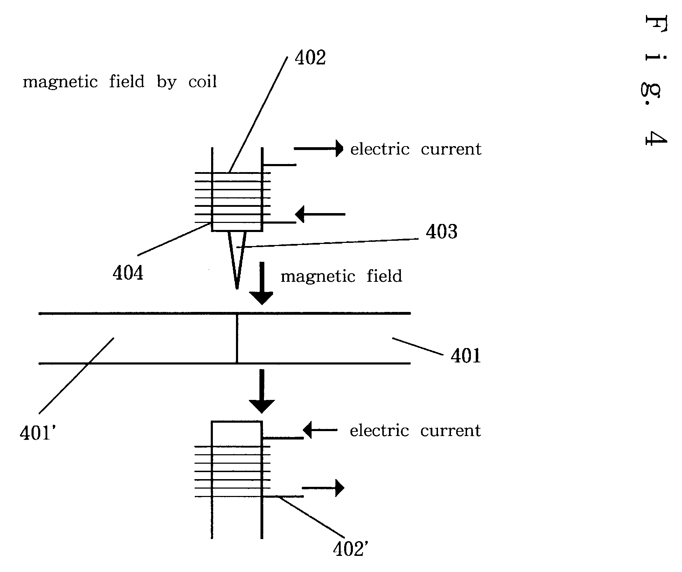

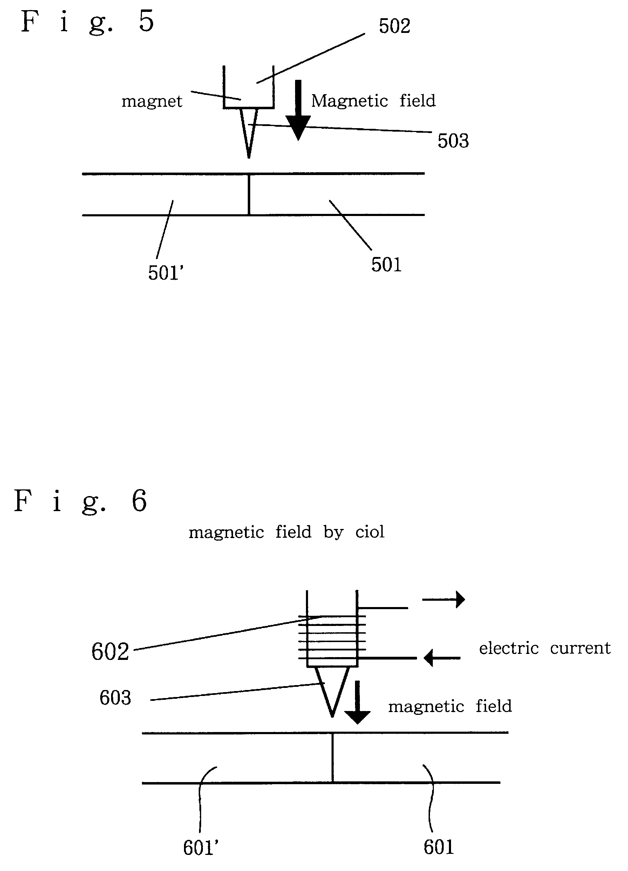

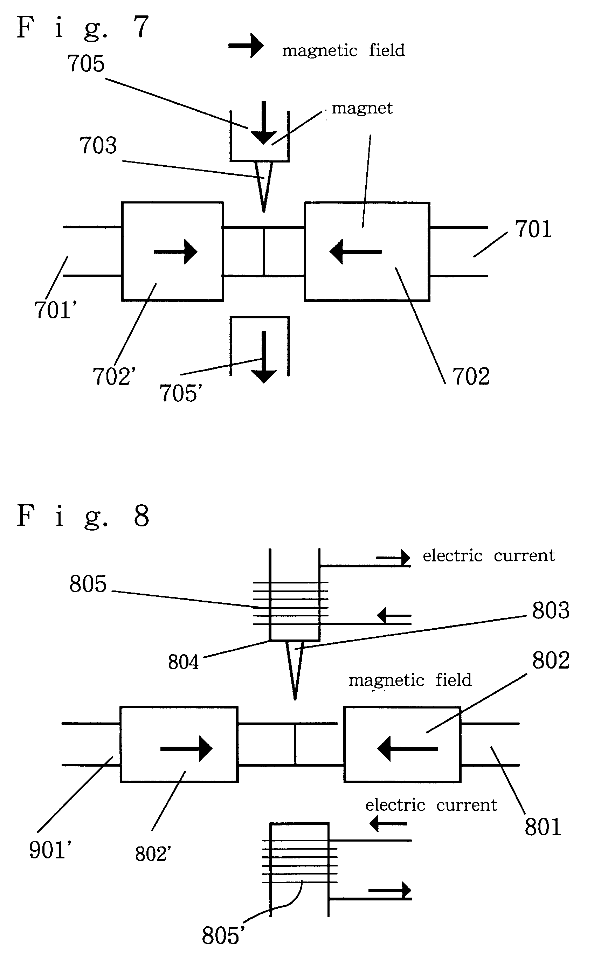

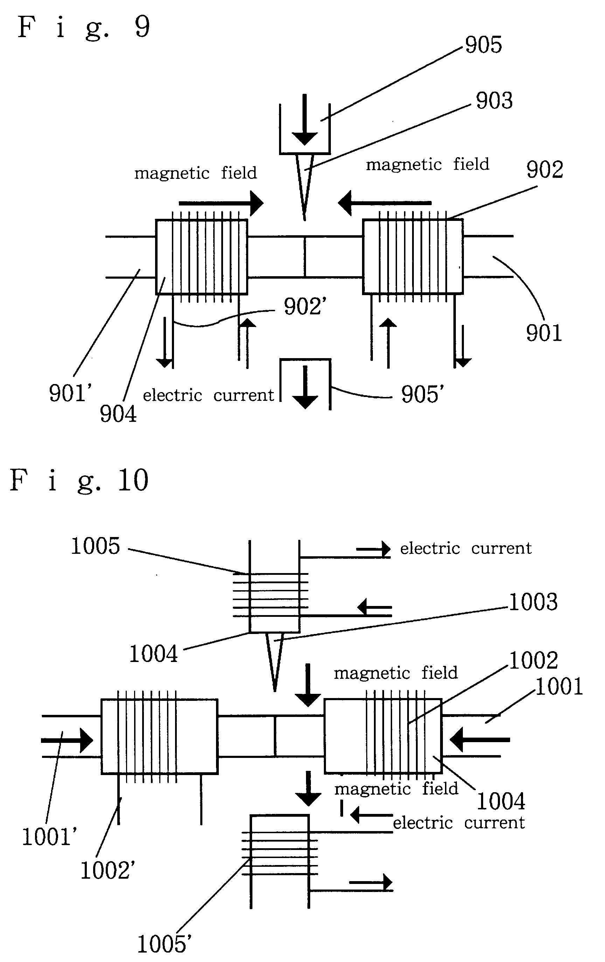

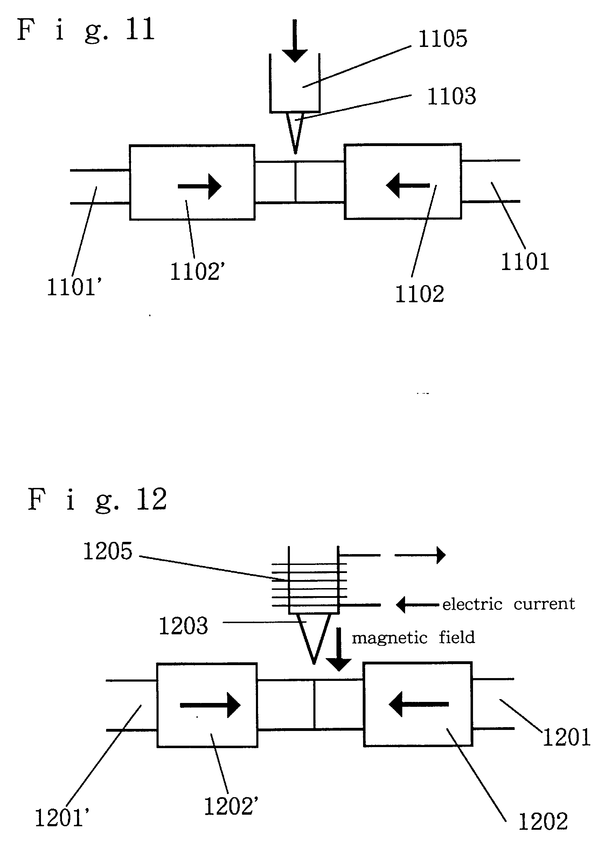

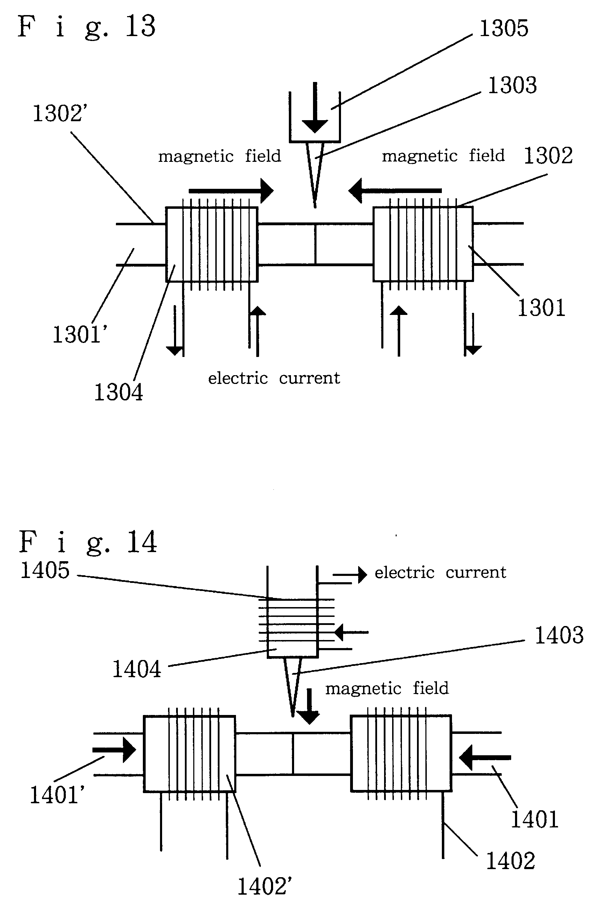

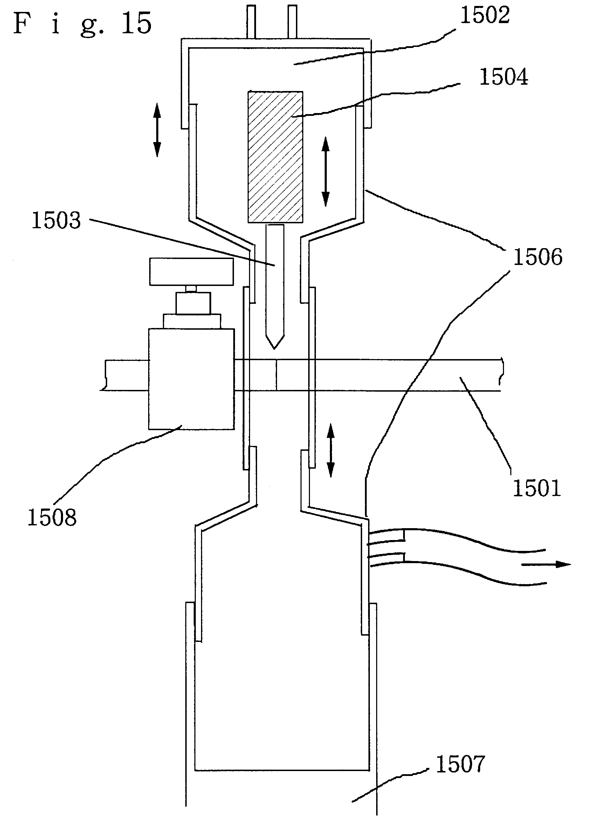

Fig. 1 is an outline diagram showing a welder in accordance with the first embodiment. Fig. 2 is an outline diagram showing a welder in accordance with a second embodiment. Fig. 3 is an outline diagram showing a welder in accordance with a third embodiment. Fig. 4 is an outline diagram showing another example of a welder. Fig. 5 is an outline diagram showing a welder in accordance with a fourth embodiment. Fig. 6 is an outline diagram showing another example of a welder. Fig. 7 is an outline diagram showing a welder in accordance with a fifth embodiment. Fig. 8 is an outline diagram showing another example of a welder. Fig. 9 is an outline diagram showing another example of a welder. Fig. 10 is an outline diagram showing another example of a welder. Fig. 11 is an outline diagram showing a welder in accordance with a sixth embodiment. Fig. 12 is an outline diagram showing another example of a welder. Fig. 13 is an outline diagram showing another example of a welder. Fig. 14 is an outline diagram showing another example of a welder. Fig. 15 is an outline diagram showing a welder in accordance with a seventh embodiment. Fig. 16 is an outline diagram showing a conventional welder.

### (Description of References)

References 101, 101', 201, 201', 301, 301', 401, 401', 501, 501', 601, 601', 701, 701', 801, 801', 901, 901', 1001, 1001', 1101, 1101', 1201, 1201', 1301, 1301', 1401, 1401', 1501, and 1601, indicate pipes to be welded.

References 102, 102', 302, 302', 502, 702, 702', 705, 705', 802, 802', 905, 1102, 1102', 1105, 1202, 1202', and 1305 indicate permanent magnets.

References 103, 203, 303, 403, 503, 603, 703, 803, 1003, 1103, 1203, 1303, 1403, 1503, and 1603, indicate electromagnets.

References 104, 404, 804, 904, 1004, 1304, 1404, and 1504 indicate insulators.

References 202, 202', 402, 402', 602, 805, 805', 902, 902', 1002, 1002', 1005, 1005', 1205, 1302, 1302', 1402, 1402', 1405, and 1502 indicate coils.

Reference 1506 indicates an outer shield (frame), reference 1507 indicates a welder head, reference 1508 indicates an obstruction such as a valve or the like, reference 1606 indicates burning, reference 1607 indicates a welded portion, reference 1608 indicates fumes, and reference 1609 indicates deposited metal.

### Best Mode for Carrying Out the Invention

Hereinbelow, the embodiments of the present invention will be discussed in detail.

### (Embodiment 1)

A first embodiment is shown in Fig. 1.

The present embodiment represents a case in which 2 3/8 inch SUS316L pipes are subjected to tungsten-inert gas welding; as shown in the figure, two pipe materials 101 and 101' which are to be welded are circumferentially surrounded by Al-Ni-Co system permanent magnets 102 and 102', and a vertical magnetic field of 300 Gauss is formed at the surface of the welded portion. In the figure, reference 103 indicates a tungsten electrode, and reference 104 indicates an insulator for insulating the magnets from the pipe material; herein, PFA or the like is employed.

After welding the above 2 pipes while supply Ar within the pipes, the following evaluations were conducted with respect to this piping, as well as with respect to piping welded by means of the conventional method, and piping having no welded portion.

HCl gas containing a moisture component of 1.4 ppm was placed within the piping at a concentration of 2.5 Kg/cm² and this was allowed to stand for a period of 12 hours, whereupon Ar gas having an super high degree of purity was supplied, the metallic elements emitted from the interior of the piping were collected on a silicon wafer at the mouth of the pipe, and a measurement of the atomic weight of the metals was conducted using the TR-XRF method (total reflection X-ray fluorescence spectroscopy). In contrast to the piping welded by means of the conventional method, in which the concentration of Fe was 2.4 x 10¹⁴ atoms/cm², the concentration of Cr was 6.5 x 10¹¹ atoms/cm², the concentration of Ni was 2.3 x 10¹³ atoms/cm², and the concentration of Mn was 1.5 x 10¹² atoms/cm², the piping of the present embodiment and the piping which was not welded exhibited concentrations of metallic atoms which were below the detection threshold of the TR-XRF method (1 x 10¹⁰ atoms/cm²).

From this, it was learned that piping which was welded by the welder of the present embodiment suffers no contamination as a result of fumes, and can be applied to highly clean apparatuses.

Furthermore, when the piping was severed and the inner surface thereof was observed, it was found that, in contrast to the welded portion of the conventional method, in which particle boundary corrosion was observed, no corrosion was present in the welded portion of the present embodiment, and moreover, the welded portion was flat.

### (Embodiment 2)

In place of the permanent magnet of embodiment 1, an electromagnet was employed, and the welder shown in Fig. 2 was built, and the welding of piping was conducted in a manner identical to that of embodiment 1. Here, the electromagnets consist of insulator tubes 204 wrapped around the outer circumference of piping 201, and coils 202, which are wrapped around the outer circumference thereof. An electric current is caused to flow through the coils so that a magnetic field which is vertical with respect to the welded portion and has a strength of 300 Gauss is generated. When an evaluation was conducted in a manner identical to that of embodiment 1, it was determined that separation and the like of the metal as a result of HCl was not present, and a clean inner surface was maintained.

### (Embodiment 3)

A third embodiment of the present invention is shown in Fig. 3.

The present embodiment represents an example applied to an automatic welder for piping; Al-Ni-Co system permanent magnets 302 were provided at a holding portion for tungsten electrodes 303, and a vertical magnetic field of 300 Gauss was formed with respect to the welded portion.

Using this welder, a piping was welded, and thereupon, in order to ascertain the state of the inner surface of the piping as a result of fumes, an evaluation identical to that of embodiment 1 was conducted. As in embodiment 1, separation and the like of the metal as a result of HCl was not present, and it was determined that a clean inner surface was maintained.

Furthermore, as shown in Fig. 4, identical effects were obtained in the case in which a welder was employed in which, in place of the permanent magnets, a coil was provided at the periphery of tungsten electrode 403 through the medium of an insulating tube 404.

### (Embodiment 4)

A fourth embodiment of the present invention is shown in Fig. 5.

In the welder of the present embodiment, a Al-Ni-Co system permanent magnet 502 was provided around the tungsten electrode 503 of an automatic welder for piping. In this example, the strength of the magnetic field at the welded portion was 300 Gauss.

After the pipes were welded using this welder, in order to ascertain the state of the inner surface of the piping as a result of fumes, an evaluation identical to that of embodiment 1 was conducted. It was determined that separation and the like of the metal as a result of HCl was not present, and a clean inner surface was maintained.

In the case in which the permanent magnets were replaced by electromagnets, as shown in Fig. 6, identical results were obtained.

### (Embodiment 5)

A fifth embodiment of the present invention is shown in Fig. 7.

In the welder of the present embodiment, 2 pipes 701 and 701' to be welded were surrounded by permanent magnets 702 and 702', and permanent magnets 705 and 705' were provided at the holding portion of the tungsten electrode 703 as well, and a vertical magnetic field was generated at the welded portion.

After welding was conducted using this welder, in order to ascertain the state of the inner surface of the piping as a result of fumes, an evaluation identical to that of embodiment 1 was conducted. It was determined that separation and the like of the metal resulting from HCl gas was not present, and a clean inner surface was maintained. Furthermore, in comparison with the case of embodiment 1, in the present embodiment, a still narrower welding bead width was obtained, and the flatness of the welded portion was further improved.

Furthermore, it was determined that the welders of Figs. 8, 9, and 10, in which the permanent magnets were replaced by electromagnets, obtained identical effects.

### (Embodiment 6)

A sixth embodiment of the present invention is shown in Fig. 11.

In the present embodiment, 2 pipe materials 1101 and 1101' which were to be welded were surrounded by permanent magnets 1102 and 1102', and furthermore, a permanent magnet 1105 was provided at the circumference of tungsten electrode 1103, and a vertical magnetic field was generated at the welded portion.

When an evaluation identical to that of embodiment 1 was conducted, it was determined that separation and the like of the metal resulting from HCl was not present, and a clean inner surface was maintained. Furthermore, in the present embodiment, a narrow welding bead width, which was identical to that in embodiment 5, was obtained.

Furthermore, it was determined that the welders shown in Figs. 12, 13, and 14, in which the permanent magnets were replaced by electromagnets, achieved the same effects.

### (Embodiment 7)

An embodiment in which an obstruction is present in the vicinity of the welded portion is shown in Fig. 15. The figure depicts the structure of a welder for welding a valve and a pipe; a coil 1503 is provided at the circumference of a tungsten electrode 1502 through the medium of an insulating tube 1504 so as to be slidable in the longitudinal direction, and as shown in the figure, an external shield 1505 which is capable of extension or retraction in accordance with the shape of the obstruction is provided. Furthermore, in the figure, references 1509 and 1510 indicate an inlet port and an discharge port for Ar gas, respectively. By conducting welding while purging the gasses within the external shield, it is possible to conduct welding in which there is absolutely no surface burning.

It was determined that identical effects were obtained even when the electromagnets were replaced by permanent magnets.

### (Embodiment 8)

In the present embodiment, pipe welding was conducted which was identical to that of embodiment 1, with the exception that a carbon dioxide laser was employed as the welding mechanism.

After the pipes were welded, in order to ascertain the state of the inner surface of the pipes resulting from the fumes, an evaluation which was identical to that of embodiment 1 was conducted. As in embodiment 1, it was determined that separation and the like of the metal as a result of the HCl was not present and a clean inner surface was maintained.

### (Embodiment 9)

In the present embodiment, pipe welding was conducted using an electron beam as the welding mechanism and applying a magnetic field of 300 Gauss to the welded portion, and in order to ascertain the state of the inner surface of the piping as a result of fumes, an evaluation which was identical to that of embodiment 1 was conducted. As in embodiment 1, it was determined that separation and the like of the metal as a result of HCl was not present and a clean inner surface was maintained.

### (Embodiment 10)

Welding was conducted using the welder of embodiment 2 and altering the strength of the magnetic field at the welded portion, and the relationship between the strength of the field and the contamination of the piping as a result of fumes was ascertained using the evaluation method of embodiment 1. The results are shown in Table 1.

**TABLE 1**

| | 0 Gauss | 40 Gauss | 80 Gauss | 300 Gauss |
|---|---|---|---|---|
| Fe | 2.4 X 10¹⁴ | 3.4 X 10¹² | 5.0 X 10¹⁰ | Below Detection Threshold |
| Cr | 6.5 X 10¹¹ | Below Detection Threshold | Below Detection Threshold | Below Detection Threshold |
| Ni | 2.3 X 10¹³ | 2.0 X 10¹¹ | Below Detection Threshold | Below Detection Threshold |
| Mn | 1.5 X 10¹² | 1.1 X 10¹⁰ | Below Detection Threshold | Below Detection Threshold |

As is clear from the table, it is possible to further improve the effect of preventing the dispersion of the fumes by applying a magnetic field satisfying the conditions set forth in Claim 2.

In the embodiments described above, the case in which pipe materials were used was explained; however, it is of course the case that the present invention is not limited to pipes, but rather may be applied to materials having any shape.

### Industrial Applicability

As explained above, in accordance with the present invention, it is possible to provide a welder which is capable of restricting the contamination by depositing metals in the vicinity of the surface of a welded portion resulting from metal fumes generated at a fused portion, is capable of preventing burning, is capable of increasing flatness of the surface of the welded portion, is capable of minimizing welding bead width, and is capable of decreasing the deposition of chrome carbide by limiting the heat input.

That is to say, using electromagnets or permanent magnets, a magnetic field possessing a vertical component with respect to the surface of the fused portion is provided, and it is possible to cause the metallic atoms generated by the fused portion during welding to be deposited on the fused portion rather than flowing to the portion downstream from the welding operation, and it is thus possible to prevent contamination.

Furthermore, it is possible to greatly improve the flatness of the fused surface having a comparatively low electrical conductivity.

In addition, by causing the ions or electrons generated by the fusing mechanism to converge and thus focusing the beam, it is possible to narrow the welding bead width, and it is possible to reduce the welding heat input, so that the deposition of chrome carbide decreases, and it is thus possible to greatly reduce particle boundary contamination.

In accordance with the invention in accordance with Claim 5, by freely setting the position of the permanent magnets or electromagnets comprising the movable magnetic field application mechanism, it is possible to reliably conduct installation even with respect to the surfaces of welded portions on which obstructions, such as for example, valves, are disposed during welding, and by conducting a gas purge of the surface of the welded portion by means of Ar gas or the like, it is possible to prevent the admixture of ambient air, and to prevent burning at the surface of the welded portion.

## Claims

1. A welder which connects a plurality of members by fusing predetermined portions (welded portions) of said plurality of members, characterized in that a means for applying a magnetic field possessing vertical components with respect to a surface of said welded portion is provided.

2. A welder in accordance with Claim 1, characterized in that a strength of a magnetic field applied to said welded portion is 50 Gauss or more.

3. A welder in accordance with one of Claims 1 and 2, wherein electric discharge in an inert gas is employed as a means for fusing said welded portion.

4. A welder in accordance with one of Claims 1 and 2, characterized in that electron beam irradiation is employed as a means for fusing said welded portion.

5. A welder in accordance with one of Claims 1 and 2, characterized in that laser irradiation is employed as a means for fusing said welded portion.

6. A welder in accordance with one of Claims 1 through 5, characterized in that a means for applying said magnetic field is made movable, and by means of freely moving a position of said means, it is possible to conduct reliable installations with respect to a surface of said welded portion even in cases in which obstructions are present during welding.

7. A welder in accordance with one of Claims 1 through 6, characterized in that said welded portion is surrounded by a frame, an admixture of ambient air is prevented by purging an interior of said frame with a non-oxidizing gas, and burning of a surface of said welded portion is thus prevented.

8. A welder in accordance with Claim 7, characterized in that a gas discharge port is provided in said frame.
